# EUROPÄISCHE PATENTANMELDUNG

(11) **EP 2 492 119 A2**
(43) Veröffentlichungstag der Anmeldung: **29.08.2012**
(21) Anmeldenummer: 12000964.2
(22) Anmeldetag: 15.02.2012
(51) Int. Cl.: B60H 1/00, F01M 5/02, F28D 20/02

(54) **Latentwärmespeicher**

(30) Priorität: 22.02.2011 DE 102011012028
(71) Anmelder: Handtmann Systemtechnik GmbH & Co. KG, 88400 Biberach/Riß (DE)
(72) Erfinder: Franz, Sebastian, 89584 Ehingen/Donau (DE); Hagel, Hubert, 88437 Maselheim-Sulmingen (DE); Licht, Jürgen, 88447 Warthausen (DE); Schneider, Stefan, 88284 Mochenwangen (DE); Frömel, Roland, 89073 Ulm (DE)
(74) Vertreter: Otten, Roth, Dobler & Partner

(57) **Zusammenfassung**

Es wird ein Latentwärmespeicher mit mehreren, nebeneinander angeordneten und jeweils zumindest einen Phasenwechselspeicher (14) umfassende Wärmetauschereinheiten (2),
- wobei wenigstens zwischen benachbarten Wärmetauschereinheiten (2) ein Wärmetauscherfluid zum Wärmeaustausch mit dem Speichermedium durchströmbar ist, vorgeschlagen, mit dem ein verbessertes Wärmemanagement realisiert wird. Dies wird dadurch erreicht,
- dass wenigstens ein gemeinsamer Zulauf (10) zum Zuführen des Wärmetauscherfluids zu den Wärmetauschereinheiten (2) und zum Aufteilen in mehrere, separate Teilströmstrecken sowie wenigstens ein gemeinsamer Ablauf (11) zum Abführen des Wärmetauscherfluids von den Wärmetauschereinheiten (2) und zum Zusammenführen aller Teilströmstrecken vorgesehen sind, so dass die Wärmetauschereinheiten (2) des gemeinsam angeströmten Stapels (13) parallel zueinander verschaltet sind,
- wobei die Anströmstelle der Wärmetauschereinheit (2) im zentralen Bereich und die Abströmstelle im radial außen angeordneten Mantelbereich der Wärmetauschereinheit (2) angeordnet sind
- oder wobei die Anströmstelle der Wärmetauschereinheit (2) im radial außen angeordneten Mantelbereich und die Abströmstelle im zentralen Bereich der Wärmetauschereinheit (2) angeordnet sind,
- so dass das Wärmetauscherfluid entlang der Wärmetauschereinheiten (2) im Wesentlichen über deren ganzen Querschnitt in radialer Richtung strömt,
- wobei die Länge aller Teilströmstrecken des Wärmetauscherfluids vom Zulauf (10) bis zum Ablauf (11) im Wesentlich gleich lang sind.

## Beschreibung

Die Erfindung betrifft einen Latentwärmespeicher mit mehreren, nebeneinander angeordneten und jeweils zumindest einen Phasenwechselspeicher umfassende Wärmetauschereinheiten nach dem Oberbegriff des Anspruchs 1.

### Stand der Technik

Derzeit wird verstärkt der Einsatz von so genannten Latentwärmespeichern diskutiert bzw. vorangetrieben. Latentwärmespeicher werden zur temporären Zwischenspeicherung von Wärme eingesetzt, wobei eine Aggregatzustandsänderung verschiedenster Stoffe bei Temperaturänderung ausgenutzt wird. Ein bevorzugtes Anwendungsgebiet für derartige Latentwärmespeicher sind in den letzten Jahren vor allem auch Fahrzeuge mit Brennkraftmaschinen oder Brennstoffzellen mit oder ohne Reformierung geworden. Hierbei wird vorzugsweise die während des Fahrbetriebs anfallende Abwärme in einem entsprechenden Latentwärmespeicher zwischengespeichert, um vor allem nach einer Fahrpause mit abgeschaltetem Motor Wärmeenergie für die Startphase zur Vor- bzw. Anwärmung unterschiedlichster Komponenten wie Katalysatoren, Motorkomponenten oder dergleichen bereitzustellen.

Dies wird in den nächsten Jahren aufgrund sich stetig verschärfender Abgasvorschriften immer stärker in Betracht zu ziehen sein. Gerade bei der Startphase entstehen bei Brennkraftmaschinen vergleichsweise viele unerwünschte bzw. schädliche Abgaskomponenten, die deshalb entstehen, da Fahrzeugkomponenten noch nicht auf Betriebstemperatur sind. Hierbei sind nicht nur die zum Teil in vielfältiger Weise eingesetzten Katalysatoren, sondern auch Komponenten der Brennkammern des Motors und bewegte Teile des Motors von wesentlicher Bedeutung.

Entscheidend für die Entladung bzw. Beladung der Wärmespeicher ist ein guter Wärmetausch zwischen den Wärmespeichermassen bzw. dem Phasenwechselmaterial und dem Wärmetauscherfluid, insbesondere der Wärmetauscherflüssigkeit.

Beispielsweise sind bereits aus der DE 41 33 360 C2 sowie DE 38 21 358 A1 Latentwärmespeicher mit Phasenwechselmaterial bekannt, wobei das Wärmetauscherfluid zwischen dem Eingang und dem Ausgang des Latentwärmespeichers nicht geradlinig auf kürzestem Weg, sondern durch Umwege, und somit durch einen verlängerten Strömungsweg durch den Speicher strömt. Hierdurch soll eine verbesserte Aufnahme und/oder Abgabe der Wärme zwischen Phasenwechselspeichermaterial und Wärmetauscherfluid erreicht werden.

Zudem offenbart die Druckschrift DE 90 05 049 bereits einen zylinderförmigen Latentwärmespeicher bei dem die Zufuhr des Wärmemediums zu den einzelnen Segmenten auf einer Seite des Zylinders erfolgt und dann die Wärmesegmente von dieser Stelle quer zur gegenüberliegenden Seite durchströmt werden und in einem seitlichen Sammelkanal das Wärmemedium entsprechend gemeinsam abgeführt wird.

Auch wurde bereits eine Verwendung von Vakuumisolierungen sowie von Getterelementen in der DE 4 322 813 oder die Verwendung dünnschichtiger Elektroheizer zwischen zwei flachen Seiten zweier benachbarter Wärmesegmente in der DE 10 2004 023 347 A1 bereits beschrieben.

Es hat sich jedoch gezeigt, dass mit derartigen Latentwärmespeichern keine optimale Beladung und somit auch Wärmeentladung realisiert werden kann, da unterschiedlich warme bzw. weniger warme Bereiche auftreten. Demzufolge ist auch die Speichermenge des Latentwärmespeichers bzw. die Leistungsdichte, das heißt die Leistungsmenge pro Volumeneinheit, derartiger Latentwärmespeicher nicht optimal.

### Aufgabe und Vorteile der Erfindung

Aufgabe der Erfindung ist es demgegenüber, einen Latentwärmespeicher der einleitend genannten Art vorzuschlagen, mit dem ein verbessertes Wärmemanagement, insbesondere in Bezug auf die Wärmebe- und Wärmeentladung, und/oder mit dem eine verbesserte Verwendbarkeit für mobile Anwendungen realisiert wird.

Diese Aufgabe wird, ausgehend von einem Latentwärmespeicher der einleitend genannten Art, durch die kennzeichnenden Merkmale der Ansprüche 1, 2, 4 oder 7 gelöst. Durch die in den Unteransprüchen genannten Maßnahmen sind vorteilhafte Ausführungen und Weiterbildungen der Erfindungen möglich.

Dementsprechend zeichnet sich beispielsweise ein erfindungsgemäßer Latentwärmespeicher dadurch aus, dass wenigstens ein gemeinsamer Zulauf zum Zuführen des Wärmetauscherfluids zu den Wärmetauschereinheiten und zum Aufteilen in mehrere, separate Teilströmstrecken sowie wenigstens ein gemeinsamer Ablauf zum Abführen des Wärmetauscherfluids von den Wärmetauschereinheiten und zum Zusammenführen aller Teilströmstrecken vorgesehen ist, so dass die zwischen dem Zulauf und dem Ablauf angeordneten Wärmetauschereinheiten einen gemeinsam angeströmten Stapel ausbildeten und so dass die Wärmetauschereinheiten des gemeinsam angeströmten Stapels parallel zueinander verschaltet sind, wobei die Anströmstelle der Wärmetauschereinheit im zentralen Bereich der Wärmetauschereinheit und die Abströmstelle der Wärmetauschereinheit im radial außen angeordneten Mantelbereich der Wärmetauschereinheit angeordnet sind oder wobei die Anströmstelle der Wärmetauschereinheit im radial außen angeordneten Mantelbereich der Wärmetauschereinheit und die Abströmstelle der Wärmetauschereinheit im zentralen Bereich der Wärmetauschereinheit angeordnet sind, so dass das Wärmetauscherfluid entlang der Wärmetauschereinheiten im Wesentlichen über deren ganzen Querschnitt in radialer Richtung strömt, wobei die Länge aller Teilströmstrecken des Wärmetauscherfluids vom Zulauf bis zum Ablauf im Wesentlichen gleich lang sind.

Gemäß der Erfindung wird erreicht, dass bei der parallelen Durchströmung des Stapels die Summen aller Längen der einzelnen Strömungswege zwischen dem Eingang und dem Ausgang des Latentwärmespeichers etwa gleich sind. Dies trifft erfindungsgemäß, im Gegensatz zum in der DE 90 05 049 offenbarten Latentwärmespeicher, im Wesentlichen für den gesamten Querschnitt jeder Wärmetauschereinheit zu, da das Fluid radial von innen nach außen oder radial von außen nach innen strömt. Dementsprechend wird gemäß der Erfindung im gesamten Innenbereich des Gehäuses bzw. längs der Oberflächen aller Wärmetauschereinheiten und somit längs aller Teilströmstrecken die gleichen Druckverluste realisiert.

Dagegen werden gemäß der DE 90 05 049 die Bereiche außerhalb der direkten, geradlinigen Verbindungslinie der beiden jeweils außen am Rand des Zylinders und auf gegenüberliegenden Seiten angeordneten Anström- und Abströmstellen wesentlich weniger vom Fluid durchströmt wie der direkte Zwischenbereich längs der geraden, mittigen Verbindungslinie.

Gemäß der Erfindung wird vorzugsweise eine zentrale Zuströmung oder alternativ eine zentrale Abströmung des Wärmemediums im Zentrum des bevorzugt im Wesentlichen kreisförmigen Gehäuses und/oder der Wärmetauschereinheiten bzw. -segmente vorgesehen. Das Wärmefluid fließt somit vorzugsweise bei jeder Wärmetauschereinheit von der zentral bzw. axial angeordneten Anströmstelle von innen in radialer Richtung und vor allem in vorteilhafter Weise vollumfänglich bzw, über den gesamten Querschnitt bzw. über den gesamten Kreisumfarg der Wärmetauschereinheiten gleichmäßig nach außen zur vorzugsweise im Wesentlichen ringförmigen Abströmstelle bzw. zur Mantelfläche des Gehäuses bzw. des Wärmespeichers und wird dort gesammelt und gemeinsam abgeführt. Alternativ wird das Wärmefluid von außen über die im Wesentlichen ringförmige Anströmstelle bzw. von der Mantelfläche des Gehäuses/Wärmespeichers in radialer Richtung und im Wesentlich vollumfänglich über den gesamten Querschnitt bzw. Kreisfläche, nach innen zur zentralen bzw. axial angeordneten Abströmstelle geführt.

Diese radial ausgerichtete Strömung des Fluids führt zu einer deutlich besseren bzw. zu einer optimalen und vollflächig gleichmäßigen Wärmeverteilung über den Querschnitt der Wärmetauschereinheiten. Dagegen sind beim Stand der Technik weniger stark durchströmte Randbereiche, beidseits der mittig und geradlinig durch die Wärmetauscherplazten ausgebildeten Verbindungslinie vorhanden. In diesen Randbereichen muss beim Stand der Technik das Wärmefluid einerseits einen deutlich größeren Weg, nämlich bis um den Faktor Pi/2 (d.h. ca.1,7) zurücklegen als geradlinig und direkt durch die Mitte bzw. direkte verbindungslinie, die exakt dem Durchmesser entspricht. Andererseits entstehen seitlich neben dieser Verbindungslinie beim Stand der Technik Tocbereiche für das Wärmefluid, worin dies Rückströmbereiche/Wirbel und/oder nur eine sehr geringe oder ggf. sogar gar keine Strömung aufweist. Somit kann mit bisherigen Latentwärmespeichern keine optimale Beladung und somit auch Wärmeentladung realisiert werden, da unterschiedlich warme bzw. weniger warme Bereiche auftreten. Demzufolge ist auch die Speichermenge des Latentwärmespeichers bzw. die Leistungsdichte, das heißt die Leistungsmenge pro Volumeneinheit, bisheriger Latentwärmespeicher deutlich schlechter als bei der Erfindung.

Beispielsweise weisen die erfindungsgemäßen Wärmetauschereinheiten im Bereich des Zulaufs einen kurzen Zulaufströmungsweg, jedoch einen entsprechend langen Ablaufströmungsweg bis zum Ablauf des Latentwärmespeichers auf. Bei Wärmetauschereinheiten im Bereich des Ablaufs verhält sich dies entsprechend umgekehrt. Das heißt, ein langer Zulaufströmungsweg, jedoch einen entsprechend kurzen Ablaufströmungsweg. Gemäß der Erfindung ist jedoch die Summe des Zulaufströmungsweges zur Wärmetauschereinheit und der Weg längs der Wärmetauschereinheit plus des Ablaufströmungswegs dieser Wärmetauschereinheit nahezu gleich für alle Wärmetauschereinheiten des Stapels und über den gesamten Umfang der Wärmetauschereinheiten.

Alternativ oder in Kombination hierzu sind die Strömungswiderstände aller Teilströmstrecken des Wärmetauscherfluids vom Zulauf bis zum Ablauf im Wesentlich gleich groß. Beispielsweise sind die Querschnittsverhältnisse und die Längenverhältnisse der einzelnen Teilströmstrecken derart aufeinander abgestimmt, z.B. mittels Drossel- und/oder Regelelementen, dass sich die etwa gleichen Strömungswiderstände einstellen.

Vorzugsweise werden bei im Wesentlichen gleichen Querschnittsverhältnissen der einzelnen Teilströmstrecken etwa gleich große Strömungswiderstände dadurch realisiert, dass die Länge aller Teilströmstrecken des Wärmetauscherfluids vom Zulauf bis zum Ablauf im Wesentlichen gleich lang sind.

Vorteil der Erfindung ist es dementsprechend, dass alle Wärmetauschereinheiten des Stapels aufgrund der erfindungsgemäßen Merkmale etwa gleichen Druckverlusten ausgesetzt sind und sich so etwa gleiche Volumenströme für die einzelnen Wärmetauschereinheiten einstellen. Dies bewirkt wiederum, dass in etwa gleiche Wärmeströme den Wärmetauschereinheiten zu- bzw. abgeführt werden, was wiederum zu gleicher bzw. homogenerer Beladung und Entladung der Phasenwechselspeicher der Wärmetauschereinheiten für den gesamten Stapel führt, so dass eine nahezu optimale wärmeverteilung im gesamten Latentwärmespeicher erreicht wird. Demzufolge kann im Unterschied zum Stand der Technik der Latentwärmespeicher gemäß der Erfindung auch Gebrauch von seiner maximalen Speicherkapazität machen.

Für den Anwendungsfall bedeutet dies, dass bei eingesetztem Bauvolumen des Latentwärmespeichers die höchste bzw. die maximal mögliche Energiedichte/Leistungsdichte erreicht wird. Folglich verringert sich im Vergleich zum Stand der Technik bei gleicher Nutzwärmemenge das notwendige Bauvolumen des Latentwärmespeichers, was gerade bei Anwendungen mit sehr begrenztem Platzangebot, z.B. bei Fahrzeuganwendungen etc., von entscheidendem Vorteil ist.

Mit einem erfindungsgemäßen Lazentwärmespeicher kann bei gleichem Bauvolumen nach vorangegangener Stillstandsphase z.B. Abgaskatalysatoren und/oder Komponenten des Motors etc. mehr Wärmeenergie zur Verfügung gestellt werden als dies mit Latentwärmespeicher gemäß dem Stand der Technik erreicht wird.

Die in den Druckschriften DE 41 33 360 C2 sowie DE 38 21 358 A1 offenbarten Latentwärmespeicher weisen eine serielle Schaltung von entsprechenden Wärmetauschereinheizen auf, so dass am Zulauf des Latentwärmespeichers ein höheres Temperaturniveau und somit größere Wärmeenergiemengen gespeichert werden als dies im Ablaufbereich des Latentwärmespeichers bei abgekühltem Wärmetauscherfluid möglich ist. Dementsprechend können vor allen die bisherigen Wärmetauschereinheiten im Ausstrombereich des Latentwärmespeichers keine optimale bzw. hohe Energiemerge speichern, was zu einer vergleichsweise geringen Energieeffizienz für den gesamten Stapel- bzw. Latentwärmespeicher führt.

Vorzugsweise sind alle Wärmetauschereinheiten im Wesentlichen identisch ausgebildet. Hierdurch kann ein Stapel aus identischen Wärmetauschereinheiten gebildet werden, so dass sich die Herstellung der einzelnen Wärmetauschereinheiten aufgrund der Produktion einer vergleichsweise großen Anzahl an identischen Wärmetauschereinheiten verbessert.

In einer besonderen Weiterbildung der Erfindung ist das Gehäuse im Wesentlichen zylinderförmig ausgebildet. Im Unterschied zu einem quaderförmigen Gehäuse des Latentwärmespeichers weist ein zylinderförmiges Gehäuse verbessertes Stabilitäts- und Druckeigenschaften sowie Strömungseigenschaften auf.

Auch können zahlreiche identische Wärmetauschereinheiten sowohl in einem quaderförmigen als auch in einem zylinderförmigen Gehäuse in vorteilhafter Weise in Längsrichtung des Gehäuses bzw. längs der zentralen Mittelachse gestapelt werden. Dies ist vor allem bei nahezu identischen Wärmetauschereinheiten von großem Vorteil, da diese Gehäuse längs des Stapels keine wesentliche Querschnittsveränderungen aufweisen, vor allem wenn die Stapel entsprechend quer in bzw. senkrecht zur Richtung der zentralen Mittelachse bzw. Längsachse ausgerichtet sind.

Dies ist beispielsweise ein zentraler Unterschied in Bezug zum Stapel und zur Durchströmung des Latentwärmespeichers gemäß der DE 41 33 360 C2, wobei die Stapel nicht quer zur Mittelachse, sondern in Richtung Mittelachse gestapelt sind, so dass diese beim offenbarten zylinderförmigen Gehäuse unterschiedlichste Querschnittsflächen aufweisen müssen. Dementsprechend können hier keine identischen Wärmetauschereinheiten hergestellt und gestapelt werden, wie dies jedoch in vorteilhafter Weise gemäß der vorliegenden Erfindung erfolgt.

Vorzugsweise sind die Wärmetauschereinheiten im Wesentlichen aus Edelstahl hergestellt, wobei in vorteilhafter Weise ein Edelstahl mit vergleichsweise guter Wärmeleitfähigkeit vorzusehen ist. Dementsprechend wird eine hohe chemische Beständigkeit als auch eine vorteilhafte Wärmeleitfunktion der Wärmetauschereinheiten generiert.

Bei einem Latentwärmespeicher nach dem Oberbegriff des Anspruchs 1 und/oder als vorteilhafte Variante vorgenannter erfinderischer Merkmale kann zur Lösung der Aufgabe der Erfindung auch vorgesehen werden, dass die Wärmetauschereinheiten wenigstens einen Abstandshalter zum Festlegen eines Abstands für das Durchströmen des Wärmetauscherfluids zwischen den Wärmetauschereinheiten aufweisen. Hierdurch können separat herstellbare und/oder montierbare Abstandshalter und/oder Fixierungen zur Erzeugung eines Abstands zwischen den Wärmetauschereinheiten entfallen. Dies führt zu einer besonders vorteilhaften Herstellung des erfindungsgemäßen Latentwärmespeichers. Durch die erfindungsgemäßen Abstandshalter der Wärmetauschereinheiten wird erreicht, dass eine definierte Durchströmung im Zwischenbereich zwischen zwei Wärmetauschereinheiten durch das Wärmetauscherfluid gewährleistet wird. Dies führt zu vorteilhaften Strömungsverhältnissen bzw. Druckverlusten innerhalb des Latentwärmespeichers bzw. des erfindungsgemäßen Stapels, was wiederum ein vorteilhaftes Wärmemanagement bezüglich der Be- und Entladung des Latentwärmespeichers gewährleistet.

Vorzugsweise umfassen die Phasenwechselspeicher wenigstens die Abstandshalter bzw. sind die Phasenwechselspeicher als Abstandshalter ausgebildet. Das bedeutet, dass die Phasenwechselspeicher in der Weise dimensioniert sind, dass diese eine vorgegebene bzw. definierte Beabstandung zweier Wärmetauschereinheiten realisieren und zugleich offene Strömungsquerschnitte für das Wärmetauscherfluid zwischen den Wärmetauschereinheiten ausbilden. Vor allem bei identischen Wärmetauschereinheiten wird hierbei auch gewährleistet, dass zwischen den einzelnen Wärmetauschereinheiten identische Strömungsverhältnisse und somit Druckverluste gewährleistet werden, was zu einer vorteilhaften Durchströmung des gesamten Stapels bzw. Latentwärmespeichers führt.

In einer vorteilhaften Ausführungsform der Erfindung sind die Abstandshalter als Umbiegung einer Wärmetauschereinheit ausgebildet. Beispielsweise können die Wärmetauschereinheiten aus ver-/umgeformten Blechen hergestellt werden, wobei beispielsweise zwei vorteilhaft ausgeformte Bleche miteinander in der Weise verbunden werden, dass ein Speichervolumen für das Phasenwechselmaterial generiert wird. Für entsprechend aus Blechmaterial hergestellte Wärmetauschereinheiten oder auch in anderer Weise aus Metall hergestellte Wärmetauschereinheiten können vorteilhafte Umbiegungen vorgesehen werden, die zugleich als Abstandshalter gemäß der Erfindung ausgebildet werden. Dies führt zu einer besonders kostengünstigen Herstellungsweise der einzelnen Wärmetauschereinheiten und somit des gesamten Latentwärmespeichers.

Beispielsweise können die Umbiegungen nicht nur Abstandsfunktionen, sondern auch weitere Funktionen erfüllen, wie z.B. Zentrierung, das heißt Ausrichtung in Bezug zur zentralen Mittelachse und/oder zum Gehäuse, und/oder auch Fixierungsfunktion bezüglich einem Verdrehen, verstellen der Wärmetauschereinheiten sowohl in Quer- als auch in Längsrichtung und/oder in radialer Richtung des erfindungsgemäßen Latentwärmespeichers. Aufgrund der zahlreichen Funktionen, die durch Abstandshalter und/oder Umbiegungen realisierbar sind, wird eine konstruktiv vorteilhafte und kostengünstig herstellbare Umsetzung des Latentwärmespeichers gemäß der Erfindung erreicht.

Alternativ oder in Kombination hierzu können benachbarte Wärmetauschereinheiten beispielsweise auch miteinander verschweißt, punktgeschweißt bzw. stoffflüssig miteinander fixiert und/oder beabstandet werden, um u. a. eine Relativbewegung zwischen diesen zu unterbinden, so dass möglichst auch langfristig keine Veränderung bezüglich der Strömungswege bzw. Druckverluste zwischen den Wärmetauschereinheiten und/oder zwischen Wärmetauschereinheiten und Gehäuse erfolgt. So können die vorzugsweise im Wesentlichen aus Metallblech bestehenden Wärmetauschereinheiten bzw. die Phasenwechselspeicher u.a. Vertiefungen bzw. Versenkungen wie Rillen etc. und/oder Ausbuchtungen bzw. Erhebungen oder dergleichen aufweisen, um eine vorteilhafte Fluidströmung und/oder Beabstandung und/oder Fixierung/Halterung zwischen zwei benachbarten Wärmetauschereinheiten und/oder in Bezug zum Gehäuse des Latentwärmespeichers zu gewährleisten.

Ein Latentwärmespeicher nach dem Oberbegriff des Anspruchs 1 und/oder nach einer der vorgenannten Ausführungsformen kann sich in vorteilhafter Weise derart auszeichnen, dass die Wärmetauschereinheiten wenigstens eine Verdrehsicherungsvorrichtung zum Verhindern des radialen Verdrehens von Wärmetauschereinheiten aufweisen. Es hat sich gezeigt, dass dies gerade bei der Anwendung von radialsymmetrischen Gehäuseformen bzw. Wärmetauschereinheiten von Vorteil ist. Hierbei ermöglicht vor allem eine Verdrehsicherung vorteilhafte, stabile Strömungsverhältnisse zwischen den Wärmetauschereinheiten bzw. im Latentwärmespeicher gemäß der Erfindung. Diese klar definierten und möglichst auch über längere Zeiträume, insbesondere über die gesamte Lebensdauer des Latentwärmespeichers, stabilen Strömungsverhältnisse im und um den Stapel herum bzw. innerhalb des Latentwärmespeichers ist von wesentlicher Bedeutung, um nachteilige Auswirkungen bezüglich der realisierbaren maximalen Energiedichte bzw. Speicherkapazität zu vermeiden.

Vorzugsweise sind die Abstandshalter der Wärmetauschereinheiten als eine Verdrehsicherungsvorrichtung ausgebildet. Eine entsprechende Mehrfachfunktion verringert den konstruktiven und somit den Herstellungsaufwand.

Vorteilhafterweise weist das Gehäuse wenigstens eine thermische Isoliereinheit als Ummantelung auf. Es hat sich gezeigt, dass vor allem eine Vakuumisoliereinheit von besonderem Vorteil ist, da bei vergleichsweise geringem Isoliervolumen eine ausgesprochen große bzw. vorteilhafte thermische Isolierwirkung erreicht wird. Dies ist vor allem für Fahrzeuganwendungen von besonderem Vorteil, da hier im Allgemeinen vergleichsweise wenig Platzangebot vorhanden ist. Eine besonders vorteilhafte und die erfindungsgemäße Aufgabe lösende Ausbildung eines Latentwärmespeichers nach dem Oberbegriff des Anspruchs 1 mit einer Vakuumisoliereinheit als thermische Isoliereinheit und/oder nach einer der vorgenannten Ausführungsvarianten zeichnen sich dadurch aus, dass die Vakuumisoliereinheit wenigstens eine Gettereinheit mit einem Gettermaterial umfasst. Ein vorteilhaftes Gettermaterial gewährleistet ein besonders vorteilhaftes Vakuum in der Vakuumisoliereinheit. Hierbei gehen an der Oberfläche des Gettermaterials die Gasmoleküle mit den Atomen des Gettermaterials eine direkte chemische Verbindung ein oder die Gasmoleküle im Vakuum werden durch Sorption festgehalten. Hierdurch werden verbleibende Gase bzw. Moleküle im Vakuum entsprechend gebunden, so dass das Vakuum der Vakuumisoliereinheit verbessert bzw. auch über längere Zeit erhalten bleiben kann.

Als Gettermaterial werden beispielsweise Barium-, Aluminium-, Titan-, Zirkonium- und/oder Magnesium und/oder deren Legierungen verwendet. Vorzugsweise wird das Gettermaterial in Form von Scheiben, Pillen, Ringen oder dergleichen ausgebildet und beispielsweise mittels eines Halterelements werden mehrere derartige Gettereinheiten gemeinsam gehaltert, beispielsweise mittels eines entsprechend auszubildenden Blechs oder dergleichen.

Vorzugsweise ist das Gettermaterial auf der gegenüber liegenden Seite einer Evakuieröffnung des Gehäuses bzw. der Isoliereinheit angeordnet. Da das Gettermaterial wie eine Pumpe wirkt, kann hierdurch das Vakuum auf vorteilhafte Weise erzeugt werden, wobei gegebenenfalls vorhandene Engstellen oder dergleichen zwischen den beiden Gehäusen bzw. den gegenüberliegenden Seiten des Latentwärmespeichers beim Vakuumieren nicht nachteilig sind.

Durch eine Erwärmung bzw. Erhitzung des Gettermaterials kann dies regeneriert bzw. reaktiviert werden, so dass im wesentlichen die ursprüngliche Bindungskapazität bzw. Sorpiontskapazität des Gettermaterials wieder zur Verfügung steht. Diese Regeneration bzw. Reaktivierung kann sehr häufig erfolgen.

Vorteilhafterweise ist das Gettermaterial im Bereich des Zulaufs des Latentwärmespeichers innerhalb der Vakuumisoliereinheit angeordnet. Hierdurch kann beispielsweise das Wärmetauscherfluid zur Erwärmung bzw. Regeneration des Gettermaterials in vorteilhafter Weise vorgesehen werden. Diese Regeneration des Gettermaterials kann beispielsweise nach vorgegebenen Zeitabständen und/oder bedarfsweise mittels vorteilhafter Sensorik oder dergleichen eingeleitet bzw. durchgeführt werden.

Ein auch langfristig vorteilhaftes Vakuum in der Vakuumisoliereinheit ist vor allem zur Gewährleistung der großen thermischen Isolierungswirkung von großem Vorteil. Dementsprechend kann die durch das Phasenwechselmaterial gespeicherte Wärmemenge auch nach längeren Zeiträumen in vorteilhafter Weise für entsprechende Anwendungen wie Erwärmung von Fahrzeugkomponenten oder dergleichen vorgesehen werden.

Grundsätzlich kann bei Fahrzeuganwendungen zur erfindungsgemäßen Wärmespeicherung Abwärme des Kühlwassers und/oder des Abgassystems und/oder des Bremssystems und/oder sonstiger Fahrzeugkomponenten mit Abwärmeerzeugung verwendet werden. Beispielsweise können auch bei Brennstoffzellenfahrzeugen entsprechende Abwärmemengen von Brennstoffzellenkomponenten und/oder von Standheizungen oder dergleichen Beiträge zur Befüllung des Latentwärmespeichers gemäß der Erfindung verwendet werden.

Generell ist von Vorteil für den Latentwärmespeicher gemäß der Erfindung ein Thermoöl oder dergleichen als Wärmetauscherfluid vorzusehen, das beispielsweise mittels einer vorteilhaften Pumpe durch den Latentwärmespeicher hindurchgepumpt bzw. an den Wärmetauschereinheiten entlang gepumpt wird.

Darüber hinaus ist von Vorteil beispielsweise als Phasenwechselmaterial ein Salz oder dergleichen vorzusehen, das beispielsweise einen Phasenwechsel bei ca. 200° C aufweist. Dieses Phasenwechselmaterial wird im Phasenwechselspeicher bzw. in entsprechenden Klammern der Wärmetauschereinheiten gespeichert, die beispielsweise vakuumiert sind.

In vorteilhafter Weise weist der Latentwärmespeicher ein inneres Gehäuse auf, in dem der Stapel mit den Wärmetauschereinheiten angeordnet ist und ein äußeres Gehäuse, wobei zwischen dem inneren und dem äußeren Gehäuse eine thermische Isolierung bzw. ein Vakuum vorgesehen ist.

Vorzugsweise sind (möglichst alle) Vakuum berührende Bauteile bzw. Komponenten des erfindungsgemäßen Latentwärmespeichers aus Edelstahl ausgebildet, z.B. 1.4301 oder dergleichen. Edelstahl weist z.B. gegenüber vielen anderen Metallen eine geringere Ausgasungsrate auf.

Vorzugsweise weist die Vakuumisoliereinheit wenigstens teilweise eine Oberflächenschicht bzw. eine Beschichtung zur Reduzierung der Emissionen in das Vakuum auf. Beispielsweise ist ein vergleichsweise günstiges Material für die Vakuumisoliereinheit bzw. das Gehäuse vorgesehen. Durch eine vorteilhafte emissionsarme Beschichtung bzw. Oberflächenschicht mit einem vorteilhaften Material wie vorzugsweise Kupfer und/oder z.B. Silber, Aluminium, Zink etc., können Verluste durch Wärmestrahlung um z.B. bis ca. 50% reduziert werden. Grundsätzlich ist eine Verwendung von emissionsarmen Materialien für die Vakuumisoliereinheit von Vorteil.

Vorteilhafterweise werden (möglichst alle) Vakuum berührenden Bauteile bzw. Komponenten des erfindungsgemäßen Latentwärmespeichers besonders behandelt bzw. ausgebildet. Zum einen werden die Oberflächen besonders rein ausgebildet, um möglichst eine geringe Ausgasungsrate und/oder auch kurze Evakuierzeit zu gewährleisten.

In einer besonderen Weiterbildung der Erfindung ist wenigstens teilweise die Oberfläche der Vakuumisoliereinheit bzw. von (möglichst allen) Vakuum berührenden Bauteilen bzw. Komponenten in vorteilhafter Weise z.B. elektro-poliert und/oder mit Glasperlen oder dergleichen gestrahlt. Beispielsweise kann ein Emissionsgrad von kleiner als 3% durch die erfindungsgemäßen Maßnahmen erreicht werden.

Zum anderen sollten alle Wärme abstrahlenden bzw. Vakuum berührende Flächen einen möglichst geringen Emissionsgrad aufweisen, um Strahlungsverluste möglichst gering zu halten. Hierfür werden derartige Flächen vorzugsweise ebenfall elektro-poliert und/oder in vorteilhafter Weise beschichtet.

Zur Fixierung bzw. Anordnung des Innengehäuses bzw. des Stapels innerhalb des Außengehäuses können vorteilhafte, beispielsweise flexible Halte- und/oder Fixiervorrichtungen vorgesehen werden. Zum Beispiel können (Metall-)Bänder oder dergleichen und/oder Spiralfedern bzw. Federelemente sowohl zur Halterung in Längs- und/oder in radialer Richtung verwendet werden. Von besonderem Vorteil sind Haltekomponenten, die eine vergleichsweise schlechte Wärmeleitfähigkeit aufweisen (z.B. < 10 W/mK), so dass eine Wärmeleitung zwischen dem Stapel bzw. dem Innengehäuse als auch dem Außengehäuse möglichst minimiert werden. Dies trifft auch in Bezug zu vorteilhaften Zulaufleitungen und/oder Ablaufleitungen zwischen dem Außengehäuse und dem Innengehäuse bzw. dem Stapel des Latentwärmespeichers zu.

Alternativ oder in Kombination zu Bändern, Federn oder dergleichen kann die Halte- und/oder Fixiervorrichtung als sogenannte GVI (Gestützte Vakuum-Isolation) ausgebildet werden. Eine GVI umfasst in vorteilhafter Weise zahlreiche Isolier-/Stützelemente wie Isolierfasern, z.B. aus Glasfasern oder dergleichen, wobei der Raum in denen diese angeordnet sind vakuumiert und in besonderen Anwendungsfällen ggf. mittels einer Hülle bzw. Mantelschicht, z.B. aus Folie oder dergleichen, abgedichtet ist. Vorteilhafterweise bilden im Wesentlichen das innere und das äußere Gehäuse des erfindungsgemäßen Latentwärmespeichers die Mantelschicht, so dass auf eine separate bzw. zusätzliche Folie oder dergleichen verzichtet werden kann.

Vorteilhafterweise kann in besonderen Anwendungsfällen bei einer als GIV- ausgebildeten Vakuumisolierung auf zusätzliche Halte- und/oder Fixiervorrichtung zwischen den beiden Gehäusen verzichtet werden. Hier können die Isolier-/Stützelemente die Halte- und/oder Fixierfunktion übernehmen. Bei einem Verzicht auf entsprechende (metallische) Halte- und/oder Fixiervorrichtungen kann eine besonders vorteilhafte Isolationswirkung erreicht werden.

Grundsätzlich ist es von Vorteil, sowohl die Halte- bzw. Fixierkomponenten zwischen den beiden Gehäusen als auch die Zulauf- bzw. Ablaufleitungen derart auszubilden, dass aufgrund von thermischer Ausdehnung keine nachteiligen Spannungen auftreten. Beispielsweise sind die Zulauf und/oder die Ablaufleitungen gebogen ausgebildet und/oder weisen vorteilhafte Bereiche auf, um Längenveränderungen der Leitungen möglichst spannungsarm ausgleichen zu können.

Durch den erfindungsgemäßen Aufbau und die vorteilhafte Geometrie der Wärmetauschereinheiten mit dem Phasenwechselspeichermaterial wird der Latentwärmespeicher gemäß der Erfindung in vorteilhafter Weise durchströmt, so dass im Grund keine Todbereiche bzw. schlecht durchströmte Bereiche innerhalb des Speichers generiert werden, wie dies bislang beim Stand der Technik durchaus in erheblichem Maß der Fall war.

Vor allem bei Anwendungen des Latentwärmespeichers gemäß der Erfindung für Elektrofahrzeuge oder auch Hybridfahrzeuge mit einem elektrischen Antriebsmotor kann es zur Lösung der Aufgabe der Erfindung von besonderem Vorteil sein, wenigstens ein elektrisches Heizelement zum Beheizen der Phasenwechselspeicher und/oder Wärmetauschereinheiten insbesondere innerhalb des Wärmetauschergehäuses anzuordnen. Gerade bei elektrisch angetriebenen Fahrzeugen sind große elektrische Speicher on Board vorhanden, jedoch wenig bzw. nahezu keine Abwärme des Antriebsmotors, die für die Wärmeaufnahme für den erfindungsgemäßen Latentwärmespeicher verwendet werden kann. Mit dieser Erfindung wird nun erreicht, dass eine elektrische Energieversorgung bzw. Wärmespeicherung in vorteilhafter Weise realisiert werden kann, beispielsweise eine möglichst homogene Erwärmung und somit Speicherung der eingebrachten Energie/Wärme.

Beispielsweise sind wenigstens zwei separate Latentwärmespeicher gemäß der Erfindung bei einem Fahrzeug vorgesehen. Ein erster Latentwärmespeicher, der mit Wärmeenergie versorgt bzw. beladen wird, z.B. Abwärme vom Bremssystem und/oder des elektrischen Antriebsmotors etc., und ein zweiter Latentwärmespeicher, der mit elektrischer Energie versorgt bzw, beladen wird, z.B. aus der elektrischen Traktionsbatterie/-akkumulator, einer an der Hülle bzw. Außenhaut des Fahrzeugs angeordneten Photovoltaikeinheit und/oder aus einer fahrzeugexternen bzw. stationären Stromversorgung, z.B. aus der "Steckdose" bzw. von einer elektrischen "Tankstelle". Gerade die fahrzeugexterne Beladungs-Variante der Erfindung ermöglicht, dass z.B. während der elektrischen Beladung der Traktionsbatterie/-akkumulator zeitgleich bzw. zusätzlich der Latentwärmespeicher gemäß der Erfindung versorgt bzw. beladen wird.

Ein Latentwärmespeicher gemäß der Erfindung kann nicht nur sehr schnell mit relativ viel Energie versorgt bzw. beladen werden. Vielmehr wird hierdurch in Bezug auf eine Gewichts-und/oder Volumen-Einheit und auch auf die Kosten bezogener Vergleich mit der Energiespeicherung mittels einer Traktionsbatterie/-akkumulator eine deutlich vorteilhaftere Energiespeicherung im Fahrzeug bzw. on Board realisierbar. Latentwärmespeicher gemäß der Erfindung können in vorteilhafter Weise die gespeicherte Energie/Wärme u.a. für die Klimatisierung bzw. Erwärmung einer Fahrgastzelle/-kabine oder dergleichen und/oder zur Vorwärmung von Fahrzeugkomponenten wie Batterie/Akku, Katalysatoren etc. zur Verfügung stellen. Gegebenenfalls ist bei diesem Latentwärmespeicher gemäß der Erfindung das Wärmetauscherfluid als Gas, vorzugsweise Luft, ausgebildet. Hiermit wird erreicht, dass die gespeicherte Wärme/Energie direkt vom Gas/Luft von den Wärmetauschereinheiten bzw. dem Phasenwechselmaterial aufgenommen und unmittelbar beispielsweise mittels Lüftungskanälen oder dergleichen in vorteilhafter Weise in den Fahrgastraum/-kabine geleitet werden kann. Alternativ oder in Kombination hierzu kann auch ein Primär- und ein Sekundärkreislauf mit gleichartigen oder auch unterschiedlichen Wärmetauscherfluiden, d.h. Flüssigkeit und Gas/Luft, vorgesehen werden.

Vorteilhafterweise ist ein Lüfter bzw. Ventilator oder dergleichen zur Durchströmung des Latentwärmespeichers gemäß der Erfindung mit Gas/Luft vorgesehen.

Vorzugsweise ist das Heizelement zwischen zwei benachbarten Wärmetauschereinheiten angeordnet. Hierdurch wird eine besonders effektive und effiziente Energieübertragung vom elektrischen Heizelement auf die Wärmetauschereinheiten bzw. zum Phasenwechselmaterial erreicht.

Grundsätzlich kann die elektrische Beheizung in der Art eines Tauchsieders oder dergleichen realisiert werden. In einer besonderen Weiterbildung der Erfindung ist das Heizelement als Heizfolie ausgebildet. Diese Heizfolie ist vergleichsweise dünn und kann in vorteilhafter Weise unmittelbar mit den Wärmetauschereinheiten in Berührung bzw. Kontakt gebracht und somit sehr nahe am Phasenwechselmaterial angeordnet werden. Dies verbessert die Wärmeaufnahme zusätzlich.

Gerade bei der Ausbildung von Wärmetauschereinheiten mit einer flachen bzw. ebenen Seite ist die Verwendung einer Heizfolie von besonderem Vorteil. So kann diese zwischen zwei ebenen Seiten/Flächen der benachbarten Wärmetauschereinheiten angeordnet bzw. eingelegt werden. Dies ist beim Verwenden bzw. Stapeln zahlreicher Wärmetauschereinheiten von großem Vorteil, insbesondere bei der Herstellung als auch in Bezug auf die Raumausnutzung innerhalb des Latentwärmespeichers gemäß der Erfindung sowie in Bezug auf eine möglichst homogene Erwärmung und somit Speicherung der eingebrachten Energie/Wärme.

Generell ist gerade auch bei elektrisch angetriebenen Fahrzeugen von Vorteil, die Bremsenergie mit einem elektrischen Generator in elektrische Energie umzuwandeln, d.h. zu rekuperieren, und für die Erwärmung des Latentwärmespeichers gemäß der Erfindung und/oder zur Beladung der Traktionsbatterie/-akkumulator zu verwenden.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: ein schematischer Querschnitt in Längsrichtung durch einen erfindungsgemäßen Latentwärmespeicher,
- Figur 2: ein schematischer Querschnitt in Längsrichtung durch ein Innenteil des in Figur 1 aufgeführten erfindungsgemäßen Latentwärmespeichers mit einem Wärmetauscherstapel und Innengehäuse,
- Figur 3: eine schematische Draufsicht senkrecht zur Längsrichtung auf das in Figur 1 aufgeführte Innenteil des erfindungsgemäßen Latentwärmespeichers,
- Figur 4: eine schematische, perspektivische Ansicht einer ersten Wärmetauschereinheit des in Figur 2 aufgeführten Stapels,
- Figur 5: eine schematische Draufsicht einer zweiten, alternativen Wärmetauachereirnheit für den in Figur 2 aufgeführten Stapel,
- Figur 6: ein schematischer vergrößerter Seitenansichts-Ausschnitt von zwei gestapelten Wärmetauschereinheiten gemäß Figur 2 und

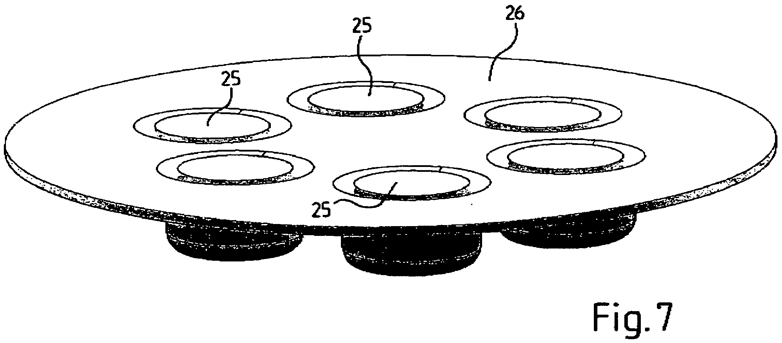

- Figur 7: eine schematische, perspektivische Ansicht einer Getzerpilleneinheit.

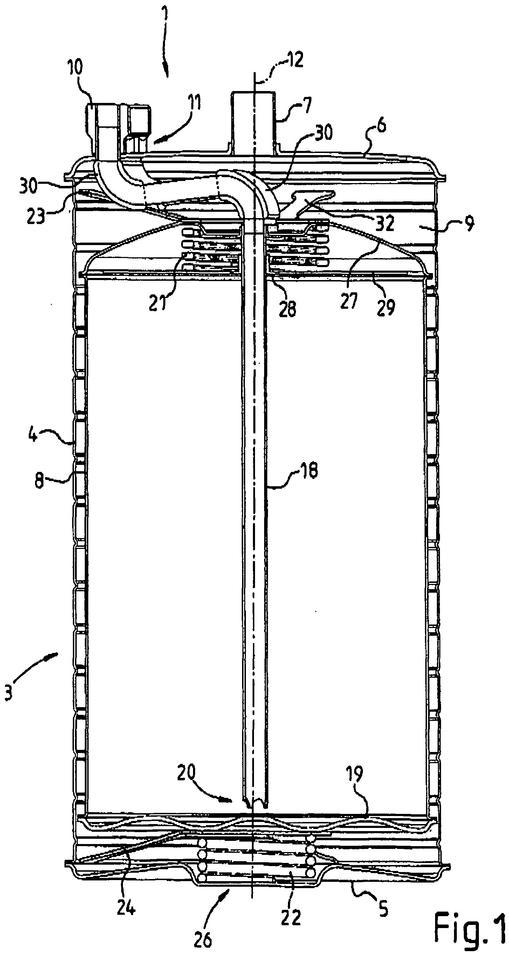

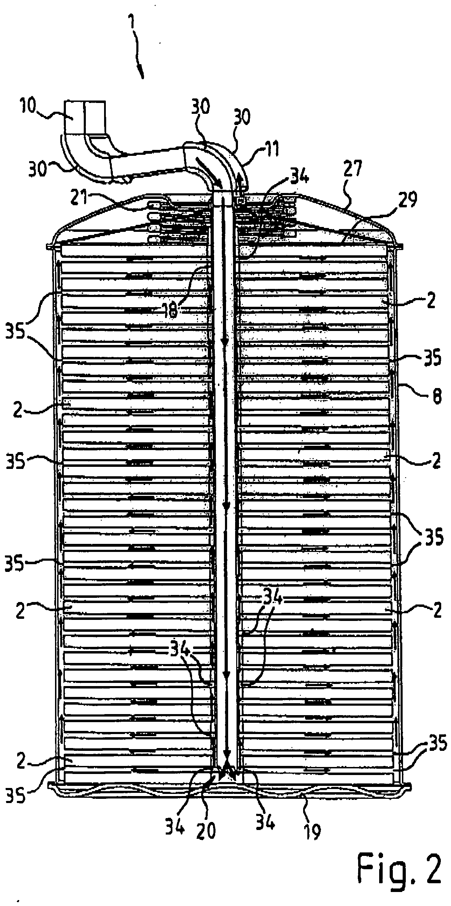

In Figur 1 ist schenatisch ein Latentwärmespeicher 1, d.h. so genannter PCM-Speicher 1 (Phase Change Material Speicher), gemäß der Erfindung dargestellt. Lediglich aus Gründen der Übersichtlichkeit sind Wärmetauschereinheiten, d.h. so genannte Sheets 2, im Inneren des Latentwärmespeicher 1 in Figur 1 nicht, jedoch in den Figur 2, 4, 5 zum Teil in vergrößerter Ansicht dargestellt. Der Latentwärmespeicher 1 umfasst als äußere Hülle ein äußeres Gehäuse 3 mit einem Zylindermantel 4 und einem Bodenelement 5. Zudem ist außen sichtbar ein Vakuumanschluss 7, der für die Erzeugung eines Vakuums 9 zwischen dem äußeren Gehäuse 3 und einem inneren Gehäuse 3 verwendet und anschließend verschlossen, insbesondere gequetscht wird. Das innere Gehäuse weist zudem einen Deckel 27 und einen Boden 19 auf.

Weiterhin sind außen auf der Seize des äußeren bzw. inneren Deckels 6, 27 sowohl ein Zulauf 10 als auch ein Ablauf 11 für ein Wärmetauscherfluid wie eine Flüssigkeit oder ein Gas vorgesehen, insbesondere ein Thermoöl, Luft oder dergleichen. Vorzugsweise erfolgen hiermit der Eintrag und/oder der Austrag der Wärmeenergie, die im Latentwärmespeicher 1, insbesondere mittels des in Kammern 14 der Sheets 2 gelagerten bzw. eingeschlossenen PCM-Materials, zwischengespeichert wird. Vorzugsweise sind die Kammern 14 bzw. Taschen vakuumiert und/oder dauerhaft verschlossen.

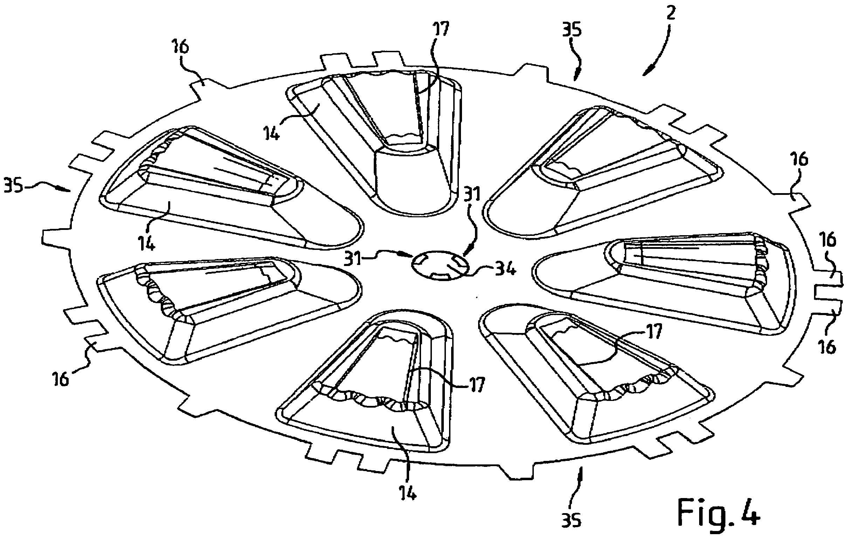

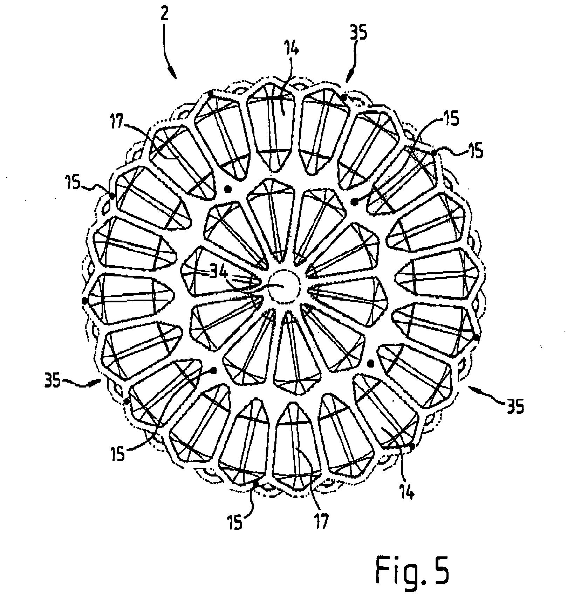

Im Innern des inneren Gehäuses 8 sind zahlreiche Sheets 2 in Längsrichtung bzw. längs der Mittelachse 12 als Stapel 13 aufgestapelt bzw. nebeneinander angeordnet. Wie vor allem in den Figuren 4 und 5 deutlich wird, umfasst jedes Sheet 2 mehrere Kammern 14, die z.B. ringförmig bzw. konzentrisch um die Mittelachse herum angeordnet sind. Vorzugsweise sind die Sheets 2 aus Metallblech hergestellt, wobei z.B. ein ebenes Blech und ein zahlreiche für die Ausbildung der Kammern 14 vorgesehene Ausbuchtungen aufweisendes Blech vorgesehen ist, das mit dem ebenen Blech in vorteilhafter Weise stoffschlüssig verbunden, insbesondere (laser-) geschweißt ist. Gegebenenfalls werden jeweils zwei Sheets 2 an den jeweiligen ebenen Seiten miteinander verbunden, insb. (punkt- und/oder laser-) geschweißt (vgl. Punkt 15 in Figur 5), so dass sich das Handling bei der Herstellung und/oder Wartung/Reparatur des Stapels 13 verbessert. Hierbei wird auch eine radiale Verstellung dieser beiden Sheets 2 zueinander verhindert, so dass sich u.a. im Betrieb keine Veränderung der Strömungsverhältnisse des Wärmetauscherfluids ergeben kann.

Eine alternative Verdrehsicherung zweier mit der ebenen Seite aneinander liegender Sheets 2 ist mit der Variante gemäß Figur 4 realisiert. Hierbei weisen die einzelnen Sheets 2 mehrere, außen bzw. umfangseitig angeordnete Laschen bzw. Flügel 16 auf, die teilweise in Richtung Mittelachse 12 gebogen sind (nicht dargestellt), so dass sich diese mit entsprechenden Flügeln 16 eines benachbarten Sheets 2 und/oder Sheetpaars verhaken und somit ein relatives Verdrehen in radialer Richtung wirkungsvoll verhindern.

Zudem sind im zentralen Bereich der Sheets 2 weitere (teilweise umgebogene) Flügel 31 bzw. Laschen 31 vorgesehen, die die Sheets 2 radial ausrichten bzw. zentrieren und einen bzw. mehrere offene Strömungsquerschnittsöffnungen gegenüber dem Rohr 18 generieren.

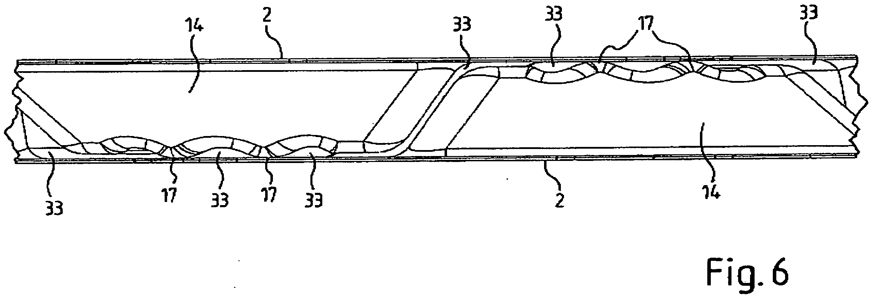

Darüber hinaus weisen die Kammern 14 vorteilhafte Oberflächenstrukturen bzw. sogenannte Kämme 17 auf, die als Abstandshalter in Bezug zur Beabstandung zweier benachbarter Sheets 2 vorzugsweise in Richtung Längsachse bzw. Mittelachse 12 ausgebildet sind (vgl. Figur 6). Diese Kämme 17 sind u. a. in Figur 4 bis 6 veranschaulicht, wobei hier eine oder beispielhaft mehrere in radialer Richtung ausgerichtete Rillen bzw. Nuten als Kämme 17 ausgebildet sind. Die Sheets 2 weisen im Bereich eines zentrischen bzw. axialen Mittelpunkts bzw. im Bereich der Längsdachse 12 eine Anströmstelle 34 auf. Umfangseitig bzw. außen zum Mantel bzw. Gehäuse 8 gerichtet ist eine Abströmstelle 35 gemäß der Erfindung vorgesehen. Bei diesem Ausführungsbeispiel ist die Abströmstelle 35 im Wesentlichen ringförmig bzw. als Ring ausgebildet.

Alternativ könnte auch dieser Ring bzw. der äußere Umfang als Anströmstelle und das Zentrumsloch bzw. die Mitte als Abströmstelle gemäß der Erfindung ausgebildet werden, wobei ebenfalls eine vorteilhafte radial ausgerichtete Strömung des WT-Fluids über den im Wesentlichen vollumfänglichen Querschnitt bzw. über die Kreisfläche der Sheets 2 realisiert wird.

Die vorzugsweise radial ausgerichteten Kämme 17 erzeugen einen vorzugsweise in radialer Richtung durchströmten Spalt 33 für das Wärmetauscherfluid etwa senkrecht zur Längsrichtung 12, so dass die Kammern 14 nahezu vollflächig und in radialer Richtung umströmt werden können. Dies ermöglicht einen vorteilhaften Wärmetausch zwischen Fluid und PCM-Material.

Für Fahrzeuganwendungen hat sich gezeigt, dass ein PCM-Material mit einem Phasenwechsel etwa im Bereich von ca. 200°C von besonderem Vorteil ist. Hierzu ist auch ein passendes Wärmetauscherfluid, insbesondere ein Thermoöl, zu verwenden, das für diesen Temperaturbereich geeignet ist.

Die Zufuhr des Fluids zu den Sheets 2 bzw. deren Anströmstellen 34 bzw. dem Stapel 13 erfolgt mit einem Rohr 18, das etwa zentral in Längsrichtung 12 angeordnet ist und von einem Boden 19 des inneren Gehäuses 8 beabstandet ist. Ein offenes Ende 20 des Rohres 18 weist in vorteilhafter Weise ein so genanntes Kronendesign auf, um u. a. mögliche Montage-/Bauteiltoleranzen auszugleichen. Das heißt, um selbst bei leicht variablem Abstand des Endes zum Boden 19 (selbst bei einem Kontakt) ein nachteiliges Unterschreiten eines ausreichenden Öffnungsquerschnittes für das ausströmende Fluid zu verhindern.

Zur Kompensation bzw. zur Reduzierung von durch Längenänderung hervorgerufene Spannungen, die durch unterschiedliche Temperaturen der Sheets 2 bzw. des Fluids auftreten können, und zur Fixierung/Halterung der Sheets 2 bzw. des Stapels 13 ist ein inneres Federelement 21 vorgesehen. Diese Feder 21 gleicht jedoch nicht nur temperaturbedingte Längenänderungen des Stapels 13 aus, sondern drückt auch die Sheets 2 gegeneinander, so dass z.B. auch die Wärmeübertragung an Kontaktflächen, insbesondere der ebenen Seite (vgl. oben), verbessert wird. Zudem wird hierdurch verhindert, dass die Sheets 2 nur lose aneinander anliegen und sich die zwischen den Kammern 14 mit Hilfe der Kämme 17 oder dergleichen festgelegten Spalte 33 unbeabsichtigt vergrößern bzw. erweitern, was zu einer nachteiligen bzw. ungewollten Veränderung der Strömungsverhältnisse des WT-Fluids in inneren Gehäuse 8 führen könnte. Beispielsweise sind die Spalte 33 zwischen den Kammern 14 etwa 0,5 mm bzw. wenige Millimeter dick.

Weiterhin ist zum Ausgleich der temperaturbedingten Längenänderung eine Hülse 28 am Rohr 18 angeordnet, um u. a. ein Verhaken einer oberen Druckplatte 29 beim Verstellen als auch ein nachteiliges Überströmen des WT-Fluids am Rohr 18 entlang zu verhindern. Die Druckplatte 29 verteilt in vorteilhafter Weise die lokal eingeleitete Federkraft der Feder 21 über den gesamten Radius. Dass dies möglichst homogen erfolgt, weist die Druckplatte 29 einen leicht konischen Verlauf von ca. 1° zur Mitte hin auf.

Der Zulauf 10 und der Ablauf 11 weisen im Bereich zwischen innerem und äußerem Gehäuse 3, 8 Bereiche zum Ausgleich von temperaturbedingten Längenänderungen auf, z.B. insbesondere im Knickbereich vorgesehene Metallbälge 30 oder dergleichen.

Wie bereits erwähnt ist der inneren Behälter/Gehäuse 8 mittels Vakuum 9 thermisch zum äußeren Gehäuse 3 isoliert. Zur Verbesserung des Vakuums 9 ist in vorteilhafter Weise ein Gettermaterial bzw. Getterpillen 25 am inneren und/oder äußeren Gehäuse 3, 8 und/oder an Fixier-/ Haltevorrichtungen wie Spann- bzw. Federelementen 22, 23, 24 und/oder an den Zu-/Abläufen 10, 11 angeordnet. Vorzugsweise sind die Getterpillen 25 mittels eines Halters 26 am äußeren Gehäuse 3, insbesondere am Boden 5, und/oder am Zulauf 10 angeordnet. Hierdurch kann bei beladenem Gettermaterial in vorteilhafter Weise das Gettermaterial bzw. die Getterpillen 25 durch Erhitzung regeneriert werden. Hierbei kann die Regenerationswärme von außen durch die Wandung bzw. durch den Boden 5 zu den Getterpillen 25 mittels einer separaten Wärmequelle und/oder mittels dem WT-Fluid gebracht werden.

Grundsätzlich sollte der Halter 26 die Oberfläche der Getterpillen 25 so wenig als möglich verdecken, um eine vorteilhafte Anlagerung von verbleibenden Atomen oder Molekülen des Vakuums 9 zu ermöglichen.

Die Fixier-/Haltevorrichtungen wie Spann- bzw. Federelemente 22, 23, 24 halten und fixieren den inneren Behälter bzw. Gehäuse 8 vom äußeren Gehäuse 3 beabstandet. Diese Elemente sollten möglichst derart ausgebildet werden, dass sich eine relativ schlechte Wärmeleitung durch diese ergibt. Hierfür können diese u. a. relativ lang und dünn bzw. mit geringem Querschnitt sowie aus entsprechendem Material hergestellt werden. Beispielsweise kann hierfür ein Edelstahl mit relativ schlechten Wärmeleiteigenschaften verwendet werden.

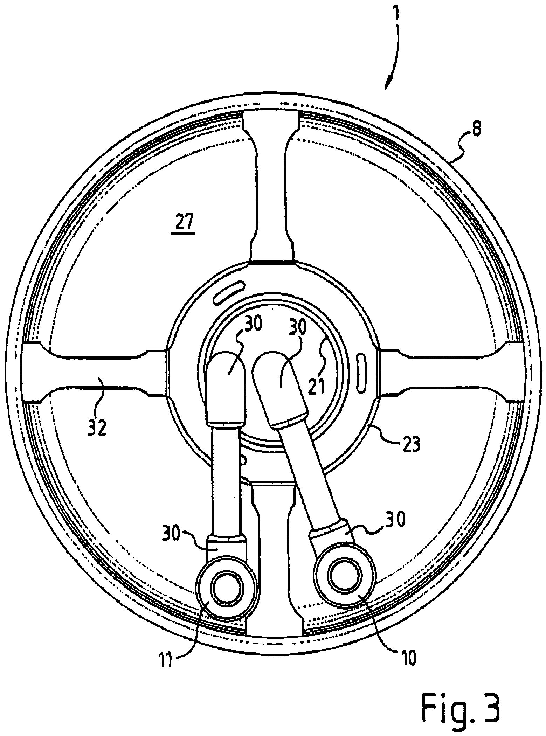

In Figur 3 ist die bevorzugte Einbaulage dargestellt. Die Halter bzw. Federn 23 und 24 weisen Stege 32 auf, die in Richtung der größten zu erwartenden Beschleunigung ausgerichtet sind, hier vor allem in vertikaler Richtung. Zudem wird in Figur 3 deutlich, dass der Ablauf 11 in vertikaler Richtung verläuft, um Konvektionsverluste durch die Wärmetauscherflüssigkeit zu minimieren.

Gemäß der Erfindung wird eine vorteilhafte Durchströmung realisiert, die nachfolgend näher erläutert wird. Das Fluid strömt durch den Zulauf 10 dem Rohr 18 zu und tritt am offenen Ende 20 in den Innenraum des Latentwärnespeichers 1 ein. Hier verhindert eine ringförmige Kontaktfläche des untersten Sheets 2 mit dem Boden 19 ein unbeabsichtigtes "unterspülen" des untersten Sheets 2. Aufgrund dessen strömt das Fluid u.a. zur ersten/untersten Anströmstelle 34 zwischen dem untersten und dem zweit untersten Sheet 2 in radialer Richtung an deren Kammern 14 bzw. dem untersten/ersten Spalt 33 vorbei zur Abströmstelle 35 bzw. zum Umfang bzw. äußeren Rand der Sheets 2. Danach strömt das Fluid entlang weiterer Abströmstellen 35 der anderen Sheets 2 und entlang dem Mantel des Gehäuses B zum Deckel 27 und durch den Ablauf 11, aus dem Latentwärmespeicher hinaus.

Ein zweiter Strömungsweg verzweigt sich am offenen Ende 20 derart, dass dieser Teilstrom längs des Rohres 18 zurück-/hochströmt und dann bei der/den nächsten Anszrömstellen 34 durch den nächsten bzw. zweiten Spalt 33 zwischen zwei benachbarten sheets 2 bzw. Kammern 14 hindurch und in radialer Richtung zum äußeren Umfang bzw. zu dem/den nächsten Abströmstellen 35 der nächsten Sheets 2 und dann wiederum entlang weiterer Abströmstellen 35 der anderen Sheets 2 und längs des Mantels des Gehäuses 8 zum Deckel 27 bzw. Ablauf 11. Entsprechendes trifft in Bezug zum dritten, vierten, fünften etc. Spalt 33 des Stapels 13 zu.

Wesentlich in Bezug zur erfindungsgemäßen Strömung der einzelnen Teilströme ist, dass die Summe bzw. Länge der einzelnen, parallel verschalteten/realisierten Teilströme vom offenen Ende 20 bis zum Ablauf 11, selbst in Bezug auf die vollumfängliche, radiale Strömung des Fluids vom Zentrum bzw. der Anströmstelle 34 zur Abströmstelle 35 bzw. zum Umfang der Sheets 2, in etwa gleich ist. Hierdurch werden gleiche Druckverhältnisse bzw. hydraulische oder pneumatische Widerstände und somit gleiche Strömungsgeschwindigkeiten bzw. Volumenströme längs des Sheets 2 bzw, der Kammern 14 sowie im inneren Gehäuse 8 verwirklicht. Dies verhindert Toträume, die nur schlecht oder wenig durchströmt sind. Das System reguliert sich zudem in vorteilhafter Weise selbst.

Nachfolgend sind verschiedene Komponenten des Latentwärmespeichers 1 mit ggf, weiteren Eigenschaften bzw. Vorteilen aufgeführt.

Die Gleitbuchse bzw. Hülse 28 soll ein Verkanten der Druckplatte bei thermischer Ausdehnung verhindern und auf dem Ölführungsrohr 18 "gleiten". Das Buchsenmaterial ist vorzugsweise aus diesem Grund Messing. Messing und Edelstahl haben gute Gleiteigenschaften. Des Weiteren sind die Toleranzen zwischen Gleitbuchse 28 und Ölführungsrohr 18 so gering als möglich gewählt, um einen möglichst geringen Spalt zwischen den Bauteilen aufzuweisen, welcher keine oder nur eine sehr geringe Kurzschlussleckage zulässt. Ebenfalls sollte die Höhe bzw. die Spaltlänge ist auf den Einbaufall maximiert werden, um einen möglichst engen und langen Spalt darstellen zu können.

Die Feder 21 innen soll im verbauten Zustand einen definierten Anpressdruck der Druckplatte 29 auf den PCM-Stack bzw. Stapel 13 aufbringen. In Fahrzeuglage soll dieser Anpressdruck mindestens so groß wie die max. auftretende Querbeschleunigung sein. In einem Anwendungsfall wird eine Federkraft von ca. 220-250 N gewählt. Diese sollte bei allen thermischen Zuständen gewährleistet sein. Das heißt, z.B. bei ca. -40° C reduziert sich die PCM-Stack-Höhe um ca. 5 mm gegenüber ca. 20° C. Bei Betriebstemperatur um die 250°C nimmt die Höhe z. B. um ca. 5 mm gegenüber 20° C zu. Das Material der Feder 21 sollte für Temperaturen von > ca. 350C angelegt sein, da die Federvorspannung nach dem Ausheizprozess beim Evakuieren beibehalten werden muss.

Das Ülführungsrohr 18 weißt an der unteren Seite bzw. dem offenen ende 20 ein "Kronendesign" auf. Das Design ist so gewählt, dass die "Spitzen" der Krone nicht als Schneide wirken können im Falle eines direkten Kontaktes mit dem Boden 19. Die Krone soll eine Blockage des Ölflusses verhindern, sollte das Rohr 18 fälschlicherweise auf Block verbaut werden oder aufgrund thermischen Verzugs das Rohr 18 am Boden 19 anstehen. Des Weiteren dient es als zusätzliche Zentrierung des PCM-Stacks 13 und befördert das Fluid bzw. Thermoöl auf den Boden 19 des Speichers 1.

Die Druckplatte 29 dient als "Abschlussdeckel" des PCM-Stacks 13. Dieser Abschlussdeckel 29 soll zusammen mit der Gleitbuchse 28 eine Kurzschlussleckage verhindern, indem die Platte 29 den Ölfluss in jedem Fall durch die oberste PCM-Sheet-Etage leitet. Des Weiteren hat die Druckplatte 29 die Aufgabe, die Federkraft, welche lokal an der Federauflage eingeleitet wird, möglichst homogen über den gesamten Radius zu verteilen. Deswegen läuft die Druckplatte 29 mit ca. 1° konisch zur Mitte zu. Es kann ggf. die Materialdicke der Druckplatte 29 eventuell reduziert werden, indem Sicken und/oder Rippen etc. zur Versteifung und Kräfteverteilung eingebracht werden. Hochgebogenen Laschen der Platte 29 dienen der Feder 21 zusätzlich als Zentrierung.

Mantel des Gehäuses 8: Besonderes Merkmal hier ist, dass die Außenfläche des inneren Mantels z.B. elektropoliert sein sollte. Dies reduziert Verunreinigungen, welche beim Evakuieren sehr schädlich wären und reduziert den Emissionsgrad der Oberfläche bzw. verbessert die Ausgasungsrate. Eine Reduzierung des Emissionsgrads hat eine Reduzierung der Strahlungsverluste zur Folge. Zudem sollte die Außenfläche absolut schmutz- und fettfrei sein.

Die PCM-Sheets 2 werden vorzugsweise aus zwei Edelstahlblechhälften zusammengeschweißt. Eine Blechseite besitzt tiefgezogene Taschen bzw. Kammern 14 in die das flüssige PCM eingefüllt wird. Darauf wird ein ebenfalls tiefgezogene Taschen bzw. Kammern 14 aufweisendes Blech oder vorzugsweise abschließend ein flaches gestanztes Blech geschweißt.

Zwischen zwei flache, benachbarte Seiten zweier PCM-Sheets 2 (z.B. über und/oder unter den beiden PCM-Sheets 2 in Figur 6) kann in vorteilhafter Weise eine elektrisch beheizbare Heizfolie oder dergleichen angeordnet werden (lediglich aus Gründen der Übersichtlichkeit u.a. in Figur 2 oder 6 nicht dargestellt). In einer besonderen Weiterbildung der Erfindung erfolgt die elektrische Kontaktierung der zwischen zwei PCM-Sheets 2 angeordneten elektrischen Heizelemente/-folien durch das Aufeinanderstapeln der PCM-Sheets 2. Hierbei kann die elektrische Verbindung bzw. der elektrische Anschluss von PCM-Sheets 2 zu PCM-Sheets 2 in vorteilhafter Weise "durchgeschleift" bzw. weitergeleitet werden. Vorzugsweise weist der Latentwärmespeicher gemäß der Erfindung außen bzw. am äußeren Gehäuse 3 einen gemeinsamen elektrischen Anschluss auf, z.B. zwei elektrische Leiter(-enden), womit das bzw. die zahlreichen Heizelemente/-folien innerhalb des Gehäuses 8 bzw. zwischen den PCM-Sheets 2 mit elektrischer Energie versorgt werden.

Um den Ölspalt in jeder Etage einstellen zu können, sind in jeder Tasche 14 so genannte "Abstandskämme" 17 angeformt. Die einzelnen Taschen 14 sind z.B. mittels Laser in einer Niederhaltervorrichtung verschweißt. Um eine Redundanz gewährleisten zu können, wird jede Tasche 14 vorzugsweise mit zwei umlaufenden Schweißnähten versehen.

Um die Sheets 2 im inneren Mantel zu fixieren und auszurichten, sind außen Flügel 16 angebracht, welche als Abstandshalter dienen. Dieser Abstand ist notwendig, da das Öl am Mantel aufsteigt. Die Flügel 16 dienen außerdem als Federelemente, da durch Temperaturunterschiede im Sheet 2 selber es zu radialen thermischen Ausdehnungen kommen kann. Diese werden von den federnden Flügel 16 in vorteilhafter Weise kompensiert. Außerdem dienen die Flügel 16 als Torsionssperre, da die Flügel 16 im montierten Betriebszustand ineinander eingreifen. Alternativ kann eine Torsionssperre auch mittels Punktschweißen der einzelnen sheets 2 gewährleistet werden.

Die Flügel 31 innen dienen ebenfalls wie die äußeren Flügel 16 zur Abstützung, thermischen Kompensation und/oder Zentrierung des Ölführungsrohrs 18. Des Weiteren bilden die drei inneren Flügel 31 so genannte "Ölsteigtaschen". In diesen Taschen kann das Öl koaxial am Ölführungsrohr 18 zurück strömen/steigen und in die jeweilige Etage fließen.

Deckel 27 innen: Besonderes Merkmal hier ist, dass die Außenfläche ebenfalls z.B. elektropoliert sein sollte. Dies reduziert Verunreinigungen, welche beim Evakuieren sehr schädlich wären und reduziert den Emissionsgrad der Oberfläche bzw. verbessert die Ausgasungsrate. Eine Reduzierung des Emissionsgrades hat eine Reduzierung der Strahlungsverluste zur Folge. Die polierte Oberfläche muss zudem absolut fettfrei und sauber sein.

Boden 19 innen: Auch hier sollte die Außenfläche elektropoliert sein. Dies reduziert Verunreinigungen, welche beim Evakuieren sehr schädlich wären und reduziert den Emissionsgrad der Oberfläche bzw. verbessert die Ausgasungsrate. Eine Reduzierung des Emissionsgrades hat eine Reduzierung der Strahlungsverluste zur Folge.

Des Weiteren sollte das Design des inneren Bodens 19 so ausgeführt sein, dass das unterste PCM-Sheet 2 eine umlaufende Linienauflage besitzt. Dies verhindert eine Kurzschlussleckage des Öls. Die polierte Oberfläche sollte zudem absolut fettfrei und sauber sein, was u.a. die Ausgasungsrate verbessert. Die Geometrie ist in vorteilhafter Weise so ausgelegt, dass der Boden eine ausreichende Steifigkeit besitzt, um dem Vakuum 9 und anderen Einflüssen standzuhalten.

Mantel, Deckel 6 und Boden 5 des äußeren Gehäuses 3: Die Innenfläche des Mantels bzw. Gehäuses 3 sollte ebenfalls z. B. elektropoliert sein. Dies reduziert Verunreinigungen, welche beim Evakuieren sehr schädlich wären und reduziert den Emissionsgrad der Oberfläche. Eine Reduzierung des Emissionsgrades hat eine Reduzierung der Strahlungsverluste zur Folge. Die polierte Oberfläche sollte zudem absolut fettfrei und sauber sein, was u.a. die Ausgasungsrate verbessert. Versickungen im Mantel außen stabilisieren den Mantel bei Unterdruck im Inneren. Somit kann ein dünneres Ausgangsmaterial verwendet werden.

Der Metallbalg 30 des Zulaufs 10 und/oder Ablaufs 11 hat die Aufgabe, die thermische Ausdehnung des Innenbehälters 8 zu kompensieren. Hierzu werden etwa zehn Wellen in jeder Biegung integriert, welche thermische Spannungen ausgleichen können. Des Weiteren sollte der Metallbalg 30 eine möglichst geringe Wandstärke bei einer möglichst langen Gesamtlänge aufweisen. Somit werden Wärmeverluste durch Wärmeleitung reduziert.

Die Halter 23, 24 haben die Funktion, den Vakuumspalt des Innenbehälters 8 zum Außenbehälter 3 zu fixieren. Außerdem sind die Halter 23, 24 vorzugsweise bezüglich ihrer thermischen Leitfähigkeit optimiert. Das heißt, sie sind möglichst lang bei möglichst geringem Querschnitt. Die Halter 23, 24 sind je nach Einbaulage des Speichers 1 so anzuordnen, dass die Schenkel 31 des Halters 23, 24 parallel zur größten Beschleunigungsrichtung ausgerichtet sind. Im Anwendungsfall für Fahrzeuge ist die größte Beschleunigungsachse die Z-Achse des Fahrzeugs (Schlaglöcher). Aufgrund der erhöhten Festigkeit sind die Schenkel 31 der Halter 23, 24 auf Zug zu beanspruchen, diese Zugbeanspruchung ist unter anderem durch die Feder 22 außen federbelastet. Vorzugsweise sind die Halter 23, 24 wie auch alle Vakuum berührenden (metallischen) Elemente entsprechend zu behandeln, d.h. elektro-poliert, sauber, fettfrei etc.

Die Feder 22 außen soll den unteren Halter 24 auf Zug vorspannen, um ein Schwingen des Innenbehälters 8 zu minimieren. Des Weiteren wird die Feder 22 vorzugsweise als Spiralfeder dargestellt, da Spiralfedern den Vorteil einer extrem langen Drahtlänge aufweisen und somit niedrige Wärmeverluste durch Wärmeleitfähigkeit aufweisen. Das Material der Feder sollte für gängige Anwendungsfälle für Temperaturen > ca. 350° C ausgelegt werden, da die Federvorspannung nach dem Ausheizprozess beim Evakuieren beibehalten werden muss. Vorzugsweise ist die Feder 22 wie auch alle Vakuum berührenden (metallischen) Elemente entsprechend zu behandeln, d.h. elektro-poliert, sauber, fettfrei etc.

Getterpillen 25: Getter "fangen" freie Moleküle ein, die nicht abgepumpt oder durch Mikroleckagen und/oder durch sogenannte "Virtuelle Lecks" in den Vakuumraum 9 gelangt sind, und binden sie an ihre Oberfläche. Nach Aktivierung bzw. Regenerierung (erhitzen auf > ca. 200° C) diffundieren die an der Oberfläche gebundenen Moleküle in das Innere des Getters und werden dort chemisch gebunden. Die Oberfläche hat nun wieder "freie" Stellen, um erneut Fremdmoleküle binden zu können. Getter tragen somit enorm zur Verlängerung der Vakuumstandzeit bei. Des Weiteren können sie die Evakuierzeit verkürzen, da sie ebenfalls einen Pumpeffekt aufweisen.

Der Getterhalter 26 ist vorzugsweise so zu konzeptionieren, dass er die Getterpillen 25 in vorteilhafter Weise aufnehmen kann. Gleichzeitig soll aber so wenig Oberfläche der Getterpillen 25 durch den Halter 26 verdeckt werden. Des Weiteren soll der Getterhalter 26 die von außen aufgebrachte Aktivierungstemperatur best möglich an und um den Getter 25 leiten, dass die Aktivierung des Getters an der gesamten Oberfläche stattfindet. Vorzugsweise ist der Getterhalter 26 wie auch alle Vakuum berührenden (metallischen) Elemente entsprechend zu behandeln, d.h. elektro-poliert, sauber, fettfrei etc.

Das Quetschrohr 7 bzw. der Anschluss 7 dient als Anschluss einer Vakuumpumpe. Über ihn wird der Speicher evakuiert. Das Quetschrohr 7 wird vorzugsweise auf den Deckel 6 aufgelötet bzw. angeschweißt. Das Rohr 7 ist z.B. aus Kupfer, da sich Kupfer in vorteilhafter Weise verformen und abquetschen lässt. Nach Erreichen des Vakuumdrucks wird das Rohr 7 z.B. mittels einer Zange oder dergleichen verquetscht, abgeschnitten und gleichzeitig dicht verschweißt. Das Quetschrohr 7 ist so groß als möglich auszulegen (z.B. > ca. 20 mm), da dies den Flaschenhals beim Evakuieren darstellt.

### Bezugszeichenliste

1. Speicher
2. Sheet
3. Gehäuse
4. Mantel
5. Boden
6. Deckel
7. Anschluss
8. Gehäuse
9. Vakuum
10. Zulauf
11. Ablauf
12. Achse
13. Stapel
14. Kammer
15. Punkt
16. Flügel
17. Kamm
18. Rohr
19. Boden
20. Ende
21. Feder
22. Feder
23. Feder
24. Feder
25. Pille
26. Halter
27. Deckel
28. Hülse
29. Platte
30. Balg
31. Flügel
32. Steg
33. Spalt
34. Anströmstelle
35. Abströmstelle

## Patentansprüche

1. Latentwärmespeicher mit mehreren, nebeneinander angeordneten und jeweils zumindest einen Phasenwechselspeicher (14) umfassende Wärmetauschereinheiten (2),
- wobei die Phasenwechselspeicher (14) ein im Betrieb einen Phasenwechsel aufweisendes Speichermedium zum Speichern von Wärmeenergie umfassen,
- wobei die Wärmetauschereinheiten (2) innerhalb eines Wärmetauschergehäuses (3, 8) angeordnet sind,
- wobei wenigstens zwischen benachbarten Wärmetauschereinheiten (2) ein Wärmetauscherfluid zum Wärmeaustausch mit dem Speichermedium durchströmbar ist,
- wobei jede Wärmetauschereinheit (2) wenigstens eine zugeordnete Anströmstelle zum Anströmen der jeweiligen Wärmetauschereinheit (2) mit dem Wärmetauscherfluid und eine zugeordnete Abströmstelle zum Abströmen des Wärmetauscherfluids von der jeweiligen Wärmetauschereinheit (2) aufweisen,
**dadurch gekennzeichnet,**
- **dass** wenigstens ein gemeinsamer Zulauf (10) zum Zuführen des Wärmetauscherfluids zu den Wärmetauschereinheiten (2) und zum Aufteilen in mehrere, separate Teilströmstrecken sowie wenigstens ein gemeinsamer Ablauf (11) zum Abführen des Wärmetauscherfluids von den Wärmetauschereinheiten (2) und zum Zusammenführen aller Teilströmstrecken vorgesehen sind,
- so dass die zwischen dem Zulauf (10) und dem Ablauf (11) angeordneten Wärmetauschereinheiten (2) einen gemeinsam angeströmten Stapel (13) ausbilden und
- so dass die Wärmetauschereinheiten (2) des gemeinsam angeströmten Stapels (13) parallel zueinander verschaltet sind,
- wobei die Anströmstelle der Wärmetauschereinheit (2) im zentralen Bereich der Wärmetauschereinheit (2) und die Abströmstelle der Wärmetauschereinheit (2) im radial außen angeordneten Mantelbereich der Wärmetauschereinheit (2) angeordnet sind
- oder wobei die Anströmstelle der Wärmetauschereinheit (2) im radial außen angeordneten Mantelbereich der Wärmetauschereinheit (2) und die Abströmstelle der Wärmetauschereinheit (2) im zentralen Bereich der Wärmetauschereinheit (2) angeordnet sind,
- so dass das Wärmetauscherfluid entlang der Wärmetauschereinheiten (2) im Wesentlichen über deren ganzen Querschnitt in radialer Richtung strömt,
- wobei die Länge aller Teilströmstrecken des Wärmetauscherfluids vom Zulauf (10) bis zum Ablauf (11) im Wesentlich gleich lang sind.

2. Latentwärmespeicher nach dem Oberbegriff des Anspruchs 1 oder nach Anspruch 1, **dadurch gekennzeichnet,**
- **dass** wenigstens ein gemeinsamer Zulauf (10) zum Zuführen des Wärmetauscherfluids zu den Wärmetauschereinheiten (2) und zum Aufteilen in mehrere, separate Teilströmstrecken sowie wenigstens ein gemeinsamer Ablauf (11) zum Abführen des Wärmetauscherfluids von den Wärmetauschereinheiten (2) und zum Zusammenführen aller Teilströmstrecken vorgesehen sind,
- so dass die zwischen dem Zulauf (10) und dem Ablauf (11) angeordneten Wärmetauschereinheiten (2) einen gemeinsam angeströmten Stapel (13) ausbilden und
- so dass die Wärmetauschereinheiten (2) des gemeinsam angeströmten Stapels (13) parallel zueinander verschaltet sind,
- wobei die Anströmstelle der Wärmetauschereinheit (2) im zentralen Bereich der Wärmetauschereinheit (2) und die Abströmstelle der Wärmetauschereinheit (2) im radial außen angeordneten Mantelbereich der Wärmetauschereinheit (2) angeordnet sind
- oder wobei die Anströmstelle der Wärmetauschereinheit (2) im radial außen angeordneten Mantelbereich der Wärmetauschereinheit (2) und die Abströmstelle der Wärmetauschereinheit (2) im zentralen Bereich der Wärmetauschereinheit (2) angeordnet sind,
- so dass das Wärmetauscherfluid entlang der Wärmetauschereinheiten (2) im Wesentlichen über deren ganzen Querschnitt in radialer Richtung strömt,
- wobei die Strömungswiderstände aller Teilströmstrecken des Wärmetauscherfluids vom Zulauf (10) bis zum Ablauf (11) im Wesentlich gleich groß sind.

3. Latentwärmespeicher nach einem der vorgenannten Ansprüche, **dadurch gekennzeichnet, dass** alle Wärmetauschereinheiten (2) im Wesentlichen identisch ausgebildet sind.

4. Latentwärmespeicher nach dem Oberbegriff des Anspruchs 1 oder nach einem der vorgenannten Ansprüche, **dadurch gekennzeichnet, dass** die Wärmetauschereinheiten (2) wenigstens einen Abstandshalter (16, 17, 31) zum Festlegen eines Abstands für das Durchströmen des Wärmetauscherfluids zwischen den Wärmetauschereinheiten (2) aufweisen.

5. Latentwärmespeicher nach einem der vorgenannten Ansprüche, **dadurch gekennzeichnet, dass** die Phasenwechselspeicher (14) wenigstens die Abstandshalter (17) umfassen.

6. Latentwärmespeicher nach einem der vorgenannten Ansprüche, **dadurch gekennzeichnet, dass** die Abstandshalter (16, 31) als Umbiegung (16, 31) einer Wärmetauschereinheit (2) ausgebildet sind.

7. Latentwärmespeicher nach dem Oberbegriff des Anspruchs 1 oder nach einem der vorgenannten Ansprüche, **dadurch gekennzeichnet, dass** die Wärmetauschereinheiten (2) wenigstens eine Verdrehsicherungsvorrichtung (16, 15) zum Verhindern des Verdrehens von Wärmetauschereinheiten (2) aufweisen.

8. Latentwärmespeicher nach einem der vorgenannten Ansprüche, **dadurch gekennzeichnet, dass** die Abstandshalter (16, 17, 31) der Wärmetauschereinheiten (2) als Verdrehsicherungsvorrichtung (16) ausgebildet sind.

9. Latentwärmespeicher nach einem der vorgenannten Ansprüche, **dadurch gekennzeichnet, dass** das Wärmetauschergehäuse (3, 8) wenigstens eine thermische Isoliereinheit (9) als Ummantelung aufweist.

10. Latentwärmespeicher nach einem der vorgenannten Ansprüche, **dadurch gekennzeichnet, dass** die Isoliereinheit (9) als Vakuumisoliereinheit (9) ausgebildet ist.

11. Latentwärmespeicher nach einem der vorgenannten Ansprüche, **dadurch gekennzeichnet, dass** die Vakuumisoliereinheit (9) wenigstens teilweise eine Oberflächenschicht zur Reduzierung der Emissionen in das Vakuum aufweist.

12. Latentwärmespeicher nach einem der vorgenannten Ansprüche, **dadurch gekennzeichnet, dass** die Vakuumisoliereinheit (8) wenigstens eine Gettereinheit (25, 26) mit einem Gettermaterial umfasst.

13. Latentwärmespeicher nach einem der vorgenannten Ansprüche, **dadurch gekennzeichnet, dass** innerhalb des Wärmetauschergehäuses (3, 8) wenigstens ein elektrisches Heizelement zum Beheizen der Phasenwechselspeicher (14) und/oder Wärmetauschereinheiten (2) angeordnet ist.

14. Latentwärmespeicher nach einem der vorgenannten Ansprüche, **dadurch gekennzeichnet, dass** das Heizelement zwischen zwei benachbarten Wärmetauschereinheiten (2) angeordnet ist.

15. Latentwärmespeicher nach einem der vorgenannten Ansprüche, **dadurch gekennzeichnet, dass** das Heizelement als Heizfolie ausgebildet ist.
